# EUROPÄISCHE PATENTSCHRIFT

(11) **EP 0 998 006 B1**
(45) Veröffentlichungstag und Bekanntmachung des Hinweises auf die Patenterteilung: **02.07.2003**
(21) Anmeldenummer: 98120278.1
(22) Anmeldetag: 27.10.1998
(51) Int. Cl.: H02J 3/46

(54) **Anordnung und Verfahren zum Angleichen der Leistung eines elektrischen Versorgungsnetzes an aktuelle Spitzenlasten**
Arrangement and method for adapting the power of an electric distribution network to temporary peak loads
Arrangement et méthode pour adapter la puissance d'un réseau de distribution électrique à des charges de pointe temporaires

(43) Veröffentlichungstag der Anmeldung: 03.05.2000
(73) Patentinhaber: CRENSO GmbH Creative Energy Solutions, 95189 Köditz (DE)
(72) Erfinder: Beichler, Germar Dr., 95189 Köditz/Hof (DE)
(74) Vertreter: Schneider, Manfred, Dipl.-Ing.

(56) Entgegenhaltungen:
- EP-A- 0 505 074
- US-A- 5 479 358
- US-A- 5 536 976
- LECHLEIN H, NIMZ G: "Netzeinbindung von Kleinerzeugern" ELEKTRIZITÄTSWIRTSCHAFT, Bd. 95, Nr. 25, 1996, Seiten 1678-1684, XP002097120
- Artikel "Ein Netzinformationssystem als Planungswerkzeug im Verteilernetz" (Bulletin SEV/VSE 23/94, Seiten 11-18)

## Beschreibung

Die Erfindung betrifft eine Anordnung und ein Verfahren zum Angleichen der Leistung eines elektrischen Versorgungsnetzes an aktuelle Spitzenlasten , mit einer Netzleitstelle im Versorgungsnetz und mit mehreren, dezentral bei den Verbrauchern angeordneten, zeitweilig an- und abschaltbaren Blockheizkraftwerken, deren Wärme auf kurzem Weg dem Verbraucher zugeleitet und deren elektrische Energie in das. Versorgungsnetz eingespeist wird.

Es ist üblich, daß Energieversorgungsunternehmen über elektrische Versorgungsnetze Energie bereitstellen, die der Nachfrage der Verbraucher entspricht. Es ist dazu notwendig, daß die Zulieferung bzw. die Leistung des elektrischen Versorgungsnetzes und der Bedarf bzw. die aktuelle Spitzenlast über den Tag hinweg ständig aneinander angeglichen werden.

Der von den Elektrizitätswerken gelieferte Strom wird im wesentlichen über die Verbrennung fossiler Brennstoffe, die in fester, flüssiger oder gasförmiger Form vorliegen, und durch Nutzung der Kernenergie erzeugt. Die dazu nötigen großen Anlagen und die dabei verwendeten Verfahren führen zu einer erheblichen Trägheit bei der Veränderung des Leistungsangebotes der Stromerzeugung.

Das bedeutet, daß man plötzlich auftretenden Veränderungen in der Stromabnahme (Spitzenlast) nicht sofort mit der Bereitstellung zusätzlicher Energie (Leistung) folgen kann.
Es müssen deshalb Anlagen vorhanden und einsatzbereit sein , die diese Schwankungen weitgehend ausgleichen können. Speicher stehen für diesen Zweck nicht zur Verfügung, da die technischen Voraussetzungen nicht gegeben sind, Wechselstrom direkt zu speichern. Die für diesen Zweck notwendige Gleichrichtung, die anschließende Speicherung in entsprechenden Akkumulatoren und die erneute Wandlung in eine Wechselspannung sind sehr kostenaufwendig.
In anderen Fällen ist ein Übergang auf andere Energieformen erforderlich. Alles das führt zu einem schlechten Wirkungsgrad und zu erheblichen Kosten.
Aus diesem Grund wurden sogen. Spitzenlastkraftwerke errichtet, die insbesondere die hohen Spitzenlasten über längere Zeitintervalle im Tagesverlauf abfangen sollen. Desweiteren wurden in der Regel Dieselaggregate installiert, die mit weniger Kosten schneller die notwendige Energie bereitstellen.
Diese Spitzenlastkraftwerke verursachen hohe Stromgestehungskosten, da sowohl die Anlagen (u.a. müssen die Dieselagregate vorgewärmt sein) als auch ihr Personal ständig einsatzbereit sein müssen. Die in das Versorgungsnetz eingespeiste zusätzliche Energie ist sehr teuer. Die Ursachen sind vorallem hohe Betriebskosten, ein schlechter Wirkungsgrad der Anlagen und eine geringe Benutzungsdauer der Aggregate.

Die Erfahrung zeigt, daß die Lastspitzen um so extremer sind, je kleiner die Energieversorgungsuntemehmen sind. Das trifft vor allem auf kommunale Energieversorgungsunternehmen zu. Der Erwerb zusätzlicher Energie über den Energieverbund ist in der Praxis keine Alternative.
Ein Ausweichen auf alternative Energien, wie Sonnen- und Windenergie, ist in diesen Fällen meist nicht möglich, da diese Energie nicht immer dann zur Verfügung steht, wenn eine Lastspitze auftritt.
Beim Einsatz von Dieselkraftwerken sind die Verluste ebenfalls sehr hoch. Die hier im großen Umfang entstehende Abwärme kann häufig nicht genutzt werden.

In der Zeitschrift "Elektrizitätswirtschaft", 1996, Heft 25 wird auf den Seiten 1678 bis 1684 die "Netzeinbindung von Kleinerzeugern " von Lechlein und Nimz beschrieben. Neben den Blockheizkraftwerken, die ihre überschüssige Energie an das Versorgungsnetz abgeben, werden hier vorallem die alternativen Energieformen diskutiert. Mit den Bemühungen auf diesen Gebieten kann man jedoch meist nur den Grundbedarf mit erneuerungsfähigen Energien mit decken.
Für das Ausgleichen von Leistungsangebot und Lastspitzen in mittleren und kleinen Versorgungsnetzen sind diese Anlagen nicht geeignet. Durch die unterschiedlichen Zeiten und Größen der Energieangebote können sie das Problem der Angleichung sogar noch weiter verschärfen.

In dem Artikel von Ralph Förster "Blockheizkraftwerke - eine Alternative in der Energieversorgung" (Zeitschrift: "Elektromeister + Deutsches Elektrohandwerk de" 24/94 Seiten 2238 -2242) werden Blockheizkraftwerke und die Arbeitsweise mit ihnen beschrieben. Hier geht es vor allem um die Gewinnung von Wärme vorort beim Verbraucher. Die kombinierte Gewinnung von Wärme und elektrischer Energie in diesen Blockheizkraftwerken führt in der Summe zu einem sehr hohen Wirkungsgrad (über 90 %). Das Verhältnis zwischen der Wärmegewinnung und der Gewinnung von elektrischer Energie beträgt hier etwa 2 : 1.
Das bestimmt den Einsatzort dieser Blockheizkraftwerke, nämlich nahe am Ort der Verbraucher der Wärme. Der Verbrauch der Wärme ist meist sehr differenziert. Aus diesem Grunde sind diese Blockheizkraftwerke für die Gewinnung von elektrischer Energie nur Zufallslieferanten. Eine begrenzt planmäßige Einordnung in das Versorgungsnetz war nur dadurch gegeben, daß mit einer hohen Regelmäßigkeit dann Wärme benötigt wurde, wenn auch der Bedarf an elektrischer Energie stieg. Insoweit waren auch bisher die Blockheizkraftwerke wichtige Stromlieferanten in den Zeiten einer hohen Spitzenlast. Lösen konnten sie das Problem jedoch nicht.
Alle Regelvorgänge dieser Blockheizkraftwerke - wärmegeführt oder stromgeführt - richteten sich nur auf die Prozesse in ihrem unmittelbaren Wirkungsbereich beim Verbraucher. Der an das Versorgungsnetz abgeführte Strom wurde durch einen besonderen Zähler erfaßt, der bei Gelegenheit zu Verrechnungszwecken abgelesen und bewertet wurde.
Die regelmäßige d.h. typische Vorgehensweise bei der Bereitstellung der Energie zur Beherrschung von Lastspitzen beruht auf einer immer besseren Information über den tatsächlichen Bedarfsverlauf. In aufwendigen Analysen ermittelt man den statistischen mittleren Verlauf und steuert langfristig die Großanlagen nahe an diesem so ermittelten über die Zeit variablen Mittelwert.
Eine Lösung zum kurzfristigen Abgleichen von willkührlich auftretenden Lastspitzen ist auch damit nicht realisierbar. Das Bereithalten von Energiereserven, der Transport von Energie und das Bereithalten großer Kraftwerkseinheiten zur Überwindung der Lastspitzen ist deshalb nach wie vor extrem kostenaufwendig (vgl. Artikel in Bulletin SEV/VSE 23/94: "Ein Netzinformationssystem als Planungswerkzeug im Verteilnetz".
Brennstoff- bzw. Energiereserven werden oft ohne Nutzen verbraucht. Umweltschäden sind bei den bisher üblichen Verfahren und Arbeitsweisen der Netzleitsysteme im hohen Maße vorprogrammiert und meist nicht zu vermeiden.
Die Aufgabe der vorliegenden Erfindung besteht darin, eine Anordnung und ein Verfahren vorzuschlagen, mit denen man die Kosten für das kurzfristige Angleichen des Leistungsangebotes im Versorgungsnetz - auch an das Niveau der zufälligen Spitzenlast - senken kann. Eine weitere Aufgabe besteht darin, den Abnahmebedingungen von elektrischer Energie aus dem elektrischen Versorgungsnetz flexibel zu folgen. Gegenstand der Erfindung ist es auch, den eingesetzten Brennstoff zur Gewinnung nutzbarer Energie in Form von Wärme und elektrischer Energie besser auszunutzen.
Diese doch sehr komplexe und auch wichtige Aufgabe wird insbesondere durch die Merkmale des Anspruches 1 gelöst.
Mit der Einbindung der Blockheizkraftwerke in den Wirkungsbereich der Netzleitstelle und dem Schaffen von Möglichkeiten, diese Blockheizkraftwerke durch eine Prozeßsteuerung direkt in die gesteuerte oder geregelte - dem Bedarf angepaßte - Bereitstellung von Energie einzubeziehen, wird die Präzision des Angleichens von Leistung und Bedarf deutlich erhöht.
Die Prozeßsteuerung ist in der Lage, unter Berücksichtigung der differenzierten Abnahme und Speichermöglichkeiten für die Wärme aus den Blockheizkraftwerken, auf einen geänderten Bedarf an Elektroenergie sofort zu reagieren.
Die nicht unerhebliche, parallel zur Lieferung der elektrischen Energie erzeugte Wärme kann kontrolliert im Warmwasserspeicher der Heizungsanlage gespeichert werden. Diese steht dem Verbraucher nach einer Zuschaltung des Blockheizkraftwerkes durch die Prozeßsteuerung fast ohne Verlust zur Verfügung.
Havarien werden durch die permanente Kommunikation der Blockheizkraftwerke mit der Prozeßsteuerung in der Netzleitstelle vermieden. Wesentlich ist hierbei der Austausch und die Kontrolle der Daten über die Temperatur des Warmwasserspeichers der Heizungsanlagen.
Die Blockheizkraftwerke arbeiten mit sehr hohem Wirkungsgrad. Die Brennstoffe werden optimal genutzt. Die Umweltbelastung ist deutlich niedriger als bei den bisherigen Netzleitverfahren.
Die bei der Stromerzeugung zwangsläufig bereitgestellte Wärme muß nicht mit großen Verlusten über große Strecken geführt werden.

Die elektrische Energie für die Angleichprozesse wird im Niederspannungsbereich nahe dem Ort erzeugt, an dem der höhere Bedarf ermittelt wurde.
Umspannungs- und Transportverluste werden weitgehend vermieden.
Mit der Gestaltung der Anlage nach Anspruch 2 kann man auf optimale Weise auch den weitgehend regelmäßigen Schwankungen der Belastung des Versorgungsnetzes über den jeweiligen Tag folgen.
Die Merkmale des Anspruches 3 nutzen vorhandene Leitungsnetze zur Kommunikation zwischen der Schaltzentrale der Netzleitstelle und der Blockheizkraftwerke.
Die Ausführung nach Anspruch 4 sichert, daß in den Blockheizkraftwerken Brennstoffe (z. B. Erdgas oder Heizöl EL) verwendet werden können, die über entsprechende, vorhandene Verteilernetze permanent und abrufbereit zur Verfügung stehen.
Die Modulbauweise der Blockheizkraftwerke nach Anspruch 5 ermöglicht einerseits ein sehr präzises Angleichen der Leistung an den Bedarf. Zum Anderen kann man bei geringerem Wärmebedarf oder bei bereits hoher Speichertemperatur die zur Gewinnung von elektrischer Leistung zur Verfügung stehenden Kapazitäten optimal einsetzen.
Das Verfahren nach Anspruch 6 ermöglicht unter Anwendung der Anordnung nach Anspruch 1 eine optimale Arbeitsweise der Anlage. Die Anpassung an den Bedarf kann so auf rationelle Art gewährleistet werden.
Mit der täglichen Anpassung der Steuermatrix nach Anspruch 7 können die notwendigen Rechenoperationen der Prozeßsteuerung auf das unbedingt notwendige Maß beschränkt werden. Die Rechenkapazität steht im wesentlichen für Kontroll- und Regelfunktionen zur Verfügung.
Die weitere Ausgestaltung dieses Verfahrens in Anspruch 8 verbessert die Qualität der Steuerung und beugt evtl. auftretenden Überlastungen in den Blockheizkraftwerken vor.

Die Erfindung soll nachfolgend unter Bezugnahme auf die beiliegenden Zeichnungen an einem Ausführungsbeispiel beschrieben werden. In den Zeichnungen zeigen:
- Fig. 1: eine Anordnung zum kurzfristigen Angleichen der Spitzenlast der elektrischen Energie im elektrischen Versorgungsnetz entsprechend der vorliegenden Erfindung;
- Fig. 2: eine mögliche Ganglinie über einen Tag in einem kommunalen Energieversorgungsunternehmen;
- Fig. 3A: einen Ablauf entsprechend dem herkömmlichen Verfahren für ein Energieversorgungsunternehmen zur Bereitstellung und Verteilung von elektrischer Energie;
- Fig 3B: einen Ablauf entsprechend dem erfinderischen Verfahren für ein Energieversorgungsunternehmen zur Bereitstellung und Verteilung von elektrischer Energie.

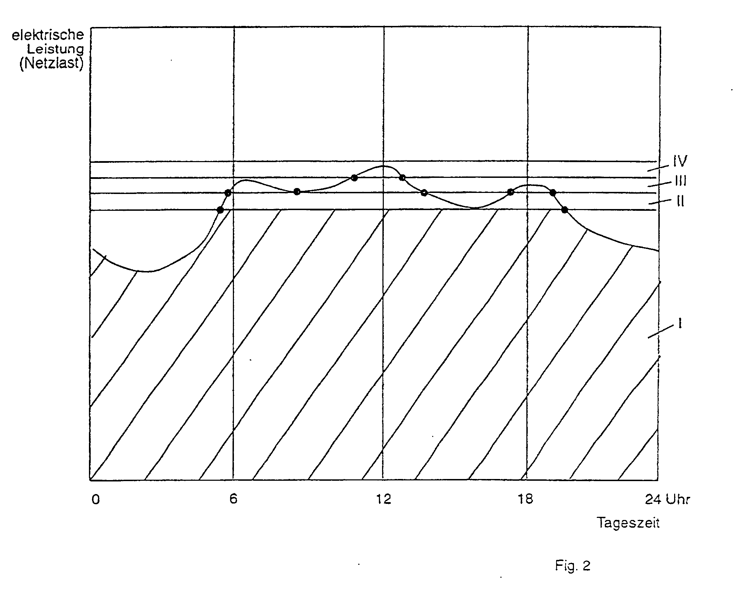

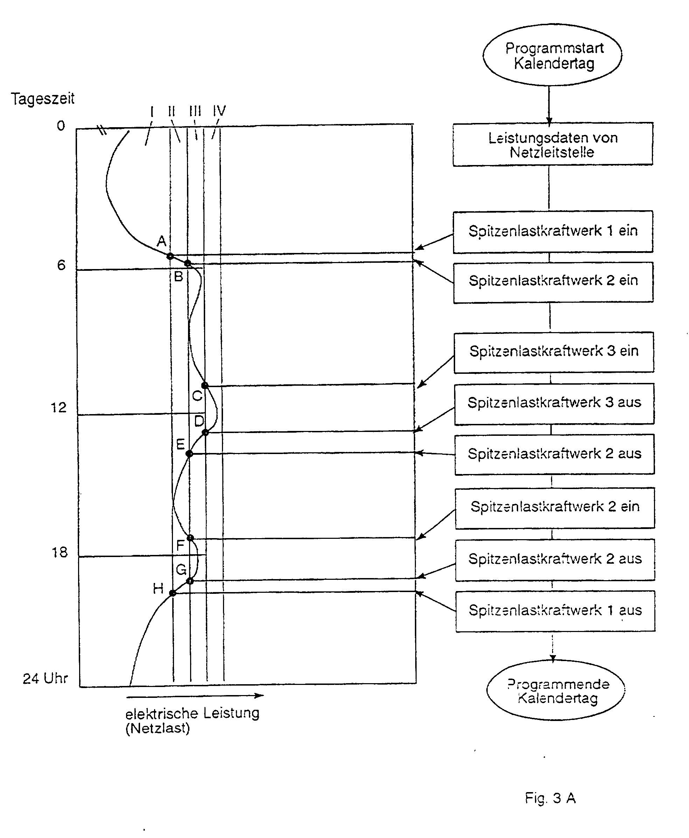

Fig. 2 zeigt einen möglichen Tagesverlauf des Energieverbrauchs in einem kommunalen Energieversorgungsuntemehmen 1. Zur Abdeckung der Grundund Mittellast erfolgen Einspeisungen 2 aus einem übergeordneten Versorgungsuntemehmen. Die im Verlaufe des Tages auftretenden relativen Lastspitzen über dieser Grund- und Mittellast werden in konventioneller Weise durch Zuschalten von Spitzenlastkraftwerken gedeckt. Dabei handelt es sich meistens um größere Generatoren, die in Spitzenlastkraftwerken, in größeren Unternehmen oder in den Energieversorgungsunternehmen selbst angeordnet sind und mit Heizöl oder Erdgas betrieben werden. Sie gewährleisten bei der Sicherung einer regelmäßigen Bereitschaft eine relativ schnelle Lieferung der benötigten Energie.
Die Darstellung zeigt den Grund- und Mittellastbereich I, der dem von dem übergeordneten Versorgungsunternehmen eingespeisten Strom entspricht.
Drei Spitzenlastbereiche II, III und IV zeigen den jeweiligen Leistungsbereich der einzelnen Spitzenlastkraftwerke. Die Spitzenlastkraftwerke werden immer dann eingeschaltet, wenn die Ganglinie jeweils in den höheren Spitzenlastbereich eintritt. Fig. 3A, auf die später eingegangen wird, verdeutlicht diese Verfahrensweise.

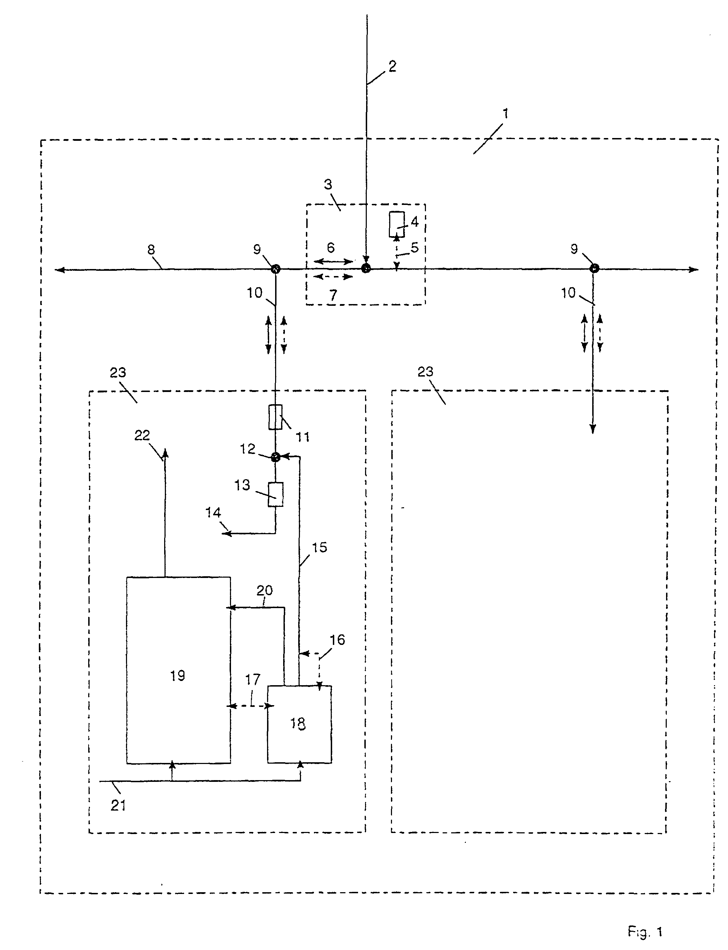

In Fig. 1 wird eine Anordnung in einem Energieversorgungsunternehmen zum kurzfristigen Ausgleichen der Spitzenlast der elektrischen Energie gezeigt. Wir bezeichnen die hierzu benutzten technischen Mittel als elektrisches Versorgungsnetz 8. Das Schema der Fig. 1 zeigt die Wesensmerkmale des elektrischen Versorgungsnetzes 8 entsprechend der vorliegenden Erfindung. Die Zeichnung zeigt in schematischer Form den Verantwortungsbereich eines Energieversorgungsuntemehmens 1, das aus einem übergeordneten Versorgungsunt ernehmen über die Einspeisung 2 mit elektrischem Strom (meist mit Hoch- oder Mittelspannung) beliefert wird.
Das Energieversorgungsuntemehmen 1 verfügt über eine Netzleitstelle 3, die die Verteilung der Energie steuert. Die Netzleitstelle 3 besitzt eine Schaltzentrale 4 mit einer Prozeßsteuerung. Diese hat wiederum eine Datenerfassung und -verarbeitung. Sie verwaltet den in das elektrische Versorgungsnetz 8 eingespeisten Strom. Sie verteilt ihn und organisiert den Signalfluß 5 über das Netz.
Mit den Bezugszahlen 6 und 7 wird die symbolische Flußrichtung des elektrischen Stromes bzw. der Daten angedeutet. Der Signalfluß 5 enthält mindestens die Daten über die Höhe der Last im elektrischen Versorgungsnetz 8, Daten über den Ort der Verbraucher und Schaltsignale für die Blockheizkraftwerke 18.
In einer erweiterten Anordnung sind im Signalfluß 5 auch die Daten über die Zustände der Blockheizkraftwerke 18 enthalten. Diese Daten können auch über die Telefonleitungen oder drahtlos übermittelt werden. Bei Verwendung des elektrischen Versorgungsnetzes 8 oder der Telefonleitung zur Datenübertragung wird eine übliche Impuls- oder Freqzenzsteuerung eingesetzt.
In dem dargestellten Ausführungsbeispiel überträgt die Netzleitstelle 3 die notwendigen Daten zur Steuerung der Blockheizkraftwerke 18 über das elektrische Versorgungsnetz 8.
An den Knoten 9 sind die einzelnen Verbraucher 23 über Hausanschlußleitungen 10 vom elektrischen Versorgungsnetz 8 abgezweigt. An der Hausanschlußleitung 10 sind nach der Anschlußsicherung 11 und dem Zähler 13 die elektrischen Anlagen 14 des Verbrauchers 23 angeschlossen.
Der Verbraucher 23 verfügt außerdem über eine Heizungsanlage 19, die mit Wärmeverbrauchern 22, wie Warmwasserbereitung und Heizung, gekoppelt ist. Die Heizungsanlage 19 ist mit einer Brennstoffzufuhr 21 verbunden. An der Heizungsanlage 19 ist ein Blockheizkraftwerk 18 wärmegekoppelt, wobei dieses Blockheizkraftwerk 18 - gemäß der Erfindung - in erster Linie der Stromerzeugung dient.
Das Blockheizkraftwerk 18 stellt eine Wärmekraftmaschine dar. Die zur Erzeugung der mechanischen Energie für den Antrieb des Generators entstehende Abwärme muß zyklisch oder kontinuierlich abgeführt werden.
Aus diesem Grunde ist das Blockheizkraftwerk 18 an die Heizungsanlage 19 gekoppelt. Die in Form von Wärme an die Heizungsanlage 19 abgegebene Energie geht also nicht verloren. Ihr Anteil an der Gesamtenergiebilanz des Blockheizkraftwerkes 18 ist etwa doppelt so hoch wie die erzeugte elektrische Energie.
Der Betrieb des Blockheizkraftwerkes 18 erfolgt über die gleiche Brennstoffzufuhr 21 wie die Heizungsanlage 19. Der von dem Blockheizkraftwerk 18 erzeugte Strom wird über die Koppelleitung 15 direkt an das elektrische Versorgungsnetz abgegeben, d. h. der Strom wird in den Knoten 12 zwischen dem Zähler 13 und der Anschlußsicherung 11 des Verbrauchers 23 eingespeist. Die Signale zum Einschalten oder Ausschalten des Blockheizkraftwerkes 18 werden von der Netzleitstelle 3 über das elektrische Versorgungsnetz 8 geleitet und sind schematisch durch den Signalfluß 16 zur Steuerung des Blockheizkraftwerkes 18 dargestellt.
Der schematisch dargestellte Signalfluß 17 zwischen dem Blockheizkraftwerk 18 und der Heizungsanlage 19 überträgt z. B. Daten über die Temperatur des Wärmespeichers, den dort vorhandenen Druck und Daten über den aktuellen Wärmeverbrauch durch den/die Verbraucher.

Fig. 3 A zeigt ein Flußdiagramm des herkömmlichen Verfahrens für Energieversorgungsuntemehmen zur Bereitstellung und Verteilung von elektrischer Energie an einem speziellen Beispiel.
Bei dem dargestellten herkömmlichen Verfahren können von einem Energieversorgungsuntemehmen drei Spitzenlastkraftwerke zu- oder abgeschaltet werden.
In einem ersten Schritt werden die Daten über die Zulieferung und den Verbrauch von Energie erfaßt. In diesem Beispiel erreicht der Verbrauch an elektrischer Energie zum Zeitpunkt A, etwa gegen 5:30 Uhr, den ersten Spitzenlastbereich II. Zu diesem Zeitpunkt wird in der Netzleitstelle 3 ein Einschaltimpuls zum Einschalten des ersten Spitzenlastkraftwerkes erzeugt.
Zum Zeitpunkt B, etwa gegen 6:00 Uhr, wird der zweite Spitzenlastbereich III erreicht und der Einschaltimpuls für das zweite Spitzenlastkraftwerk erzeugt. In den Vormittagsstunden bleibt die Last etwa in diesem zweiten Spitzenlastbereich III, der dem Regelbereich dieses Spitzenlastkraftwerkes entspricht.
Im Zeitpunkt C, um die Mittagszeit, steigt der Verbrauch weiter an, so daß der Spitzenlastbereich IV erreicht wird. In der Netzleitstelle 3 wird der Einschaltimpuls für das dritte Spitzenlastkraftwerk erzeugt.
Nach der Mittagszeit, zum Zeitpunkt D, geht der Verbrauch in den zweiten Spitzenlastbereich III zurück und in der Netzleitstelle 3 wird ein Ausschaltimpuls für das dritte Spitzenlastkraftwerk erzeugt. Eine kurze Zeit später, zum Zeitpunkt E, sinkt der Verbrauch in dem ersten Spitzenlastbereich II.
Als Folge davon wird zu diesem Zeitpunkt E das zweite Spitzenlastkraftwerk abgeschaltet.
Bei einem erneuten Anstieg des Verbrauchs zum Zeitpunkt F, in den Abendstunden, wird das zweite Spitzenlastkraftwerkt wieder eingeschaltet, das zum Zeitpunkt G, wenn der Verbrauch wieder in den ersten Spitzenlastbereich II abfällt, abgeschaltet wird. Nach einem weiteren Abfall des Verbrauchs wird zum Zeitpunkt H auch das erste Spitzenlastkraftwerk vom elektrischen Versorgungsnetz 8 abgeschaltet.

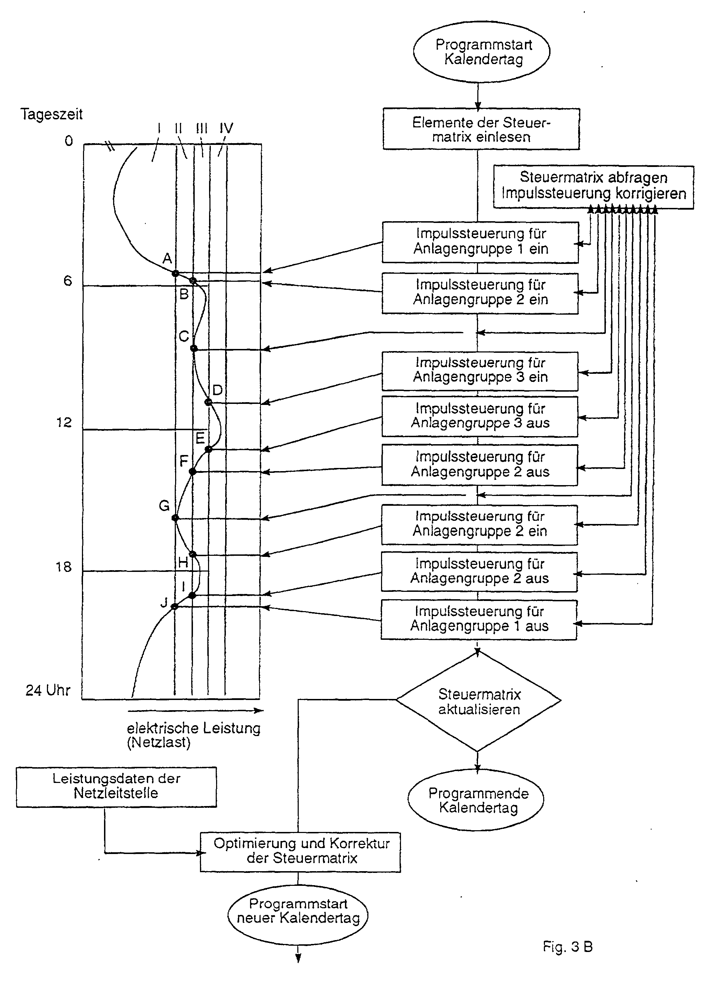

Fig. 3 B zeigt ein Flußdiagramm des Verfahrens für Energieversorgungsunternehmen zur Bereitstellung und Verteilung von elektrischer Energie entsprechend der vorliegenden Erfindung. Das Verfahren soll an einem Energieversorgungsunternehmen dargestellt werden, das Blockheizkraftwerke, die in diesem Beispiel in drei Anlagengruppen zusammengestellt sind, zu- oder abschalten kann.
Die Zusammenstellung der Anlagengruppen erfolgt nach bestimmten Parametern und kann im Verlaufe eines Tages verändert werden. Es können im Verlaufe des Tages sowohl die Anzahl der Anlagengruppen, die Anzahl der zu einer Anlagengruppe zusammengefaßten Blockheizkraftwerke 18, als auch die Zuordnung der einzelnen Blockheizkraftwerke 18 zu einer Anlagengruppe verändert werden.
Es kann auch die Zahl der Spitzenlastbereiche verändert werden. Möglich ist auch, daß mehrere Anlagengruppen in einem Spitzenlastbereich gleichzeitig wirksam werden.
Die Darstellung in Fig. 3 B verwendet die Ganglinie gemäß Fig. 2 der elektrischen Netzlast eines exemplarischen Kalendertages (Vergl. auch Fig. 3A).
Nach dem Programmstart am Kalendertag werden zunächst die Elemente der Steuermatrix des Vortages eingelesen. (Die ursprüngliche Steuermatrix wurde von der Datenverarbeitung in der Netzleitstelle 3 aus den erfaßten und eingegebenen Daten berechnet.) Damit stehen die erforderlichen Informationen bzw. die optimierten Daten aus der Steuermatrix für den normalen Betrieb des Versorgungsnetzes 8 bereit.
Zum Zeitpunkt A werden entsprechend den aus der Steuermatrix ermittelten Daten die Schaltsignale für eine erste Gruppe von zuschaltbaren Blockheizkraftwerken 18 oder Gruppen von Blockheizkraftwerken 18 erzeugt und auf das elektrische Versorgungsnetz 8 übertragen. Bei einem Anstieg des Energiverbrauchs in den zweiten Spitzenlastbereich III wird die Steuermatrix wiederum abgefragt und nach den Kriterien der Steuermatrix zum Zeitpunkt B eine zweite Gruppe von Blockheizkraftwerken 18 über Steuerimpulse aus der Schaltzentrale der Netzleitstelle 3 eingeschaltet.
Jede dieser Anlagengruppen erlaubt einen kontinuierlichen Gleitbetrieb, da in jeder Anlagengruppe einzelne Blockheizkraftwerke zu- oder abschaltbar sind. Außerdem kann jede Gruppe von Blockheizkraftwerken wiederum in einzelne Blockheizkraftwerke oder Gruppen von Blockheizkraftwerken unterteilt werden oder die Anlagengruppen können nach Maßgabe der Steuermatrix neu zusammengestellt werden. Zu einem bestimmten Zeitpunkt kann z.B. eine lokale Anlagengruppe nach dem Wärmebedarf der Verbraucher gebildet werden. Dadurch ist der Ausgleich der Spitzenlast in einem wesentlich größerem Umfang der Leistung steuerbar, und es ist ein sehr flexibler Angleich an die benötigte Leistung und den Ort der Leistung möglich.
Transportverluste können weitgehend vermieden werden.

Im Zeitpunkt C, in dem die Ganglinie die Trennlinie zwischen zwei Spitzenlastbereichen berührt, findet in der Datenverarbeitung der Netzleitstelle 3 mindestens eine Abfrage der Steuermatrix statt, die u. U. zu einer Korrektur der Steuermatrix führt, die evtl. mit einer neuen Zusammenstellung von Anlagengruppen oder einer neuen Optimierung der Steuermatrix verbunden ist. Ist kein Wechsel des Spitzenlastbereiches notwendig, erfolgt keine Auslösung von Steuerimpulsen.

Zum Zeitpunkt D wird beim Übergang der Ganglinie in den dritten Spitzenlastbereich IV die Steuermatrix abgefragt und die dritte Gruppe von Blockheizkraftwerken 18 zugeschaltet. Die entsprechenden Schaltpunkte zum Einund Abschalten der Blockheizkraftwerke 18 sind wie in den herkömmlichen Verfahren für Energieversorgungsunternehmen zum kurzfristigen Ausgleichen der Spitzenlast der elektrischen Energie im elektrischen Versorgungsnetz 8 die Hauptführungsgrößen der Prozeßsteuerung. Im Gegensatz zum Stand der Techik werden diese Führungsgrößen von einer individuell zugeschnittenen Steuermatrix variiert.
Sinkt die Energieabnahme wieder in den Spitzenlastbereich II zurück, werden die Anlagengruppen 3 und 2 in den Zeitpunkten E und F nach der entsprechenden Abfrage der Steuermatrix wieder vom elektrischen Versorgungsnetz getrennt. Zum Zeitpunkt G wird die Steuermatrix in gleicher Weise wie in dem Zeitpunkt C korrigiert.
In den Zeitpunkten H, I und J erfolgt in der bereits beschriebenen Art und Weise das Zu- bzw. Abschalten von Anlagengruppen. Unter Einbeziehung aller Leistungsdaten der Netzleitstelle 3 wird dann am Ende des Kalendertages die Steuermatrix korrigiert und neu optimiert und dient dann dem Programmstart des nächsten Kalendertages.

Die Vorteile dieser Anordnung und dieses Verfahrens für Energieversorgungsunternehmen zum kurzfristigen Ausgleichen der Spitzenlast der elektrischen Energie im elektrischen Versorgungsnetz, an das private und gewerbliche Kunden mit unterschiedlichem, zeitlich variablem Energiebedarf angeschlossen sind, liegen vor allem
- in der Optimierung des Wirkungsgrades,
- in dem kontinuierlichen Gleitbetrieb,
- in der besseren Nutzung auch der thermischen Energie,
- in der kurzzeitigen Pufferung der Energie in den Heizungs- und Prozeßwärmeanlagen der Verbraucher,
- in der Verminderung der Übertragungsverluste im elektrischen Netz,
- in der besseren Verteilung der Einspeisung der elektrischen Energie in das Versorgungsnetz,
- in der Einsparung von Betriebspersonal und Betriebskosten,
- in der größeren Betriebssicherheit und
- in der weitestgehenden Unabhängigkeit von äußeren Stromeinspeisungen während der Spitzenlastzeiten.

Weitere wesentliche Vorteile ergeben sich durch die dezentralen Einspeisungen durch die hohe Netzstabilität, durch die beachtliche Netzentlastung und durch die Bereitstellung erheblicher nutzbarer Energiereserven.
Die Blockheizkraftwerke 18 werden stromorientiert betrieben und über eine Impuls- oder Frequenzsteuerung von der Netzleitstelle 3 des Energieversorgungsuntemehmens 1 geschaltet.
In der einfachsten Ausführung wird eine Gruppe von Blockheizkraftwerken 18 abgeschalten, bis ein Ausgleich der Ganglinie erreicht ist.
In der erweiterten Ausführung wird eine Steuermatrix errechnet und ständig aktualisiert bzw. neu optimiert. Dazu werden in der Netzleitstelle 3 des Energieversorgungsuntemehmens 1 alle Daten über das Verteilergebiet gesammelt. Es sind dieses Daten über die Einspeisung der Energie, die momentane Energieabnahme, die momentanen Zustände der einzelnen Blockheizkraftwerke 18 usw.
Nimmt die Energieabnahme plötzlich zu, kann dann z. B. von der Netzleitstelle 3 sofort ermittelt werden, in welcher Höhe diese Zunahme liegt und in welchem geografischen Bereich des elektrischen Versorgungsnetzes sie vorhanden ist. Dann wird z. B. in einem Optimierungsprozeß die Umgebung dieses Verbrauchers 23 analysiert und Schaltsignale an die umliegenden als zuschaltbar ermittelten Blockheizkraftwerke 18 ausgelöst.
In gleicher Weise können dann die Blockheizkraftwerke 18 der nächsten Umgebung vom elektrischen Versorgungsnetz 8 abgeschaltet werden, wenn in dem entsprechenden Bereich der Energieverbrauch abnimmt. Auf diese Weise kann das Zuschalten von Blockheizkraftwerken 18 nach bestimmten Parametern optimiert werden.
Diese Optimierung kann z. B. nach der Leitungslänge, der Größe der Gruppen von Blockheizkraftwerken 18, den Kosten usw. erfolgen.
Zweckmäßig ist, wenn die Blockheizkraftwerke 18 oder deren schaltbare Module eine elektrische Leistung zwischen 2 kW und 10 kW besitzen.
Dadurch ist ein sehr kontinuierlicher Abgleich zwischen Verbrauch und Zulieferung von Energie möglich.
Ein besonderer Vorteil ergibt sich durch die Erhöhung der Sicherheit beim Zuschalten von Blockheizkraftwerken 18. Bei Störungen in einem örtlich begrenzten Gebiet können die Blockheizkraftwerke 18 aus einem beliebigen, jedoch möglichst nahen, anderen Gebiet zugeschaltet werden. Dabei sind keine zusätzlichen Schaltzeiten oder Anlaufzeiten erforderlich, denn die Netzleitstelle verfügt in diesem Fall stets über die erforderlichen Daten, die über die Schaltzentrale sofort in Schaltsignale (-befehle) umgesetzt werden.
Selbst ein Ausfall von mehreren Blockheizkraftwerken 18 führt zu keiner Störung, wenn ihre Anzahl im Bereich des Versorgungsnetzes 8 hinreichend groß ist.
Die Erfindung kann in ihren Einzelheiten, solange sie innerhalb der dargelegten Patentansprüche liegen, vielfältig verändert werden, ohne daß der Schutzbereich verlassen wird. So kann z. B. die Steuermatrix an jedem Kalendertag neu berechnet werden, zur Optimierung der Steuermatrix können weitere Daten über das elektrische Versorgungsnetz erfaßt werden.
Es ist möglich, zusätzlich zur Anordnung von Blockheizkraftwerken 18 ein herkömmliches Spitzenlastkraftwerk einzusetzen.
Die Blockheizkraftwerke 18 können zu einer beliebigen Anzahl von Anlagengruppen zusammengefaßt werden, deren Anzahl und Zusammensetzung über den Tag je nach Bedarf verändert werden kann.
Es ist auch möglich, an jeder relativen positiven und negativen Lastspitze die Steuermatrix abzufragen und zu korrigieren.
Wenn eine umfangreiche Datenerfassung über die Höhe der zusätzlich benötigten Energie, über den Ort des erhöhten elektrischen und/oder thermischen Energiebedarfs, über die Betriebszustände der Blockheizkraftwerke 18, über die Leistung der Blockheizkraftwerke 18 u.a.m. vorhanden ist, besteht die Möglichkeit, eine große Versorgungssicherheit zu erreichen. Es werden dann möglichts nur die Blockheizkraftwerke 18 hinzugeschaltet, bei denen auch die anfallende thermische Energie genutzt oder gespeichert werden kann.
Es ist weiter vorgesehen, daß die Blockheizkraftwerke 18 möglichst unabhängig vom eingesetzten Brennstoff sind. Diese Forderung kann im allgemeinen von Wärmekraftmaschinen weitgehend erfüllt werden. Man kann sie z.B. mit Erdgas oder Heizöl EL betreiben. Insbesondere Erdgas steht über entsprechende vorhandene Verteilernetze praktisch überall zur Verfügung. Heizölspeicher haben meist eine hohe Kapazität. Das Nachfüllen unterliegt in der Regel einem festem Reglement.
Eine Störung in einem örtlich begrenztem Gebiet kann durch Zuschalten der Blockheizkraftwerke 18 anderer, naher Gebiete leicht behoben werden.
Eine Störung in einer bestimmten Anzahl von Blockheizkraftwerken 18 führt noch nicht zu einer Störung des Gesamtprozesses.
Für den Gesamtablauf ist es auch unbedeutend, wenn eine Anzahl von Blockheizkraftwerken 18 aus Gründen nicht zuschaltbar sind, die z. B. im fehlenden Wärmebedarf oder in der fehlenden Speichermöglichkeit für Wärme besteht. An deren Stelle kann man andere, möglichst naheliegende Blockheizkraftwerke 18 aktivieren.
Dazu ist es natürlich notwendig, daß die verfügbare Zahl der Blockheizkraftwerke 18 größer ist als der übliche Bedarf. Die Zahl sollte so bemessen werden, daß praktisch alle üblichen Störungen automatisch ausgeglichen werden können.
Dieses hier beschriebene Verfahren zum kurzfristigen Angleichen der Spitzenlast der elektrischen Energie an den Bedarf im Versorgungsnetz 8 wird vollautomatisch durchgeführt. Die Prozeßsteuerung reagiert sofort, ohne daß der Mensch eingreifen muß.

### Bezugszeichenliste

- 1: Energieversorgungsuntemehmen
- 2: Einspeisung (Hoch- bzw. Mittelspannungsleitung)
- 3: Netzleitstelle
- 4: Schaltzentrale
- 5: Datenfluß von und zur Netzleitstelle
- 6: Stromflußrichtungen
- 7: Signalflußrichtungen
- 8: Elektrisches Versorgungsnetz
- 9: Verbraucheranschlußknoten
- 10: Anschlußleitung
- 11: Anschlußsicherung
- 12: Anschlußknoten der Koppelleitung
- 13: Zähler
- 14: elektrische Anlage
- 15: Koppelleitung
- 16: Signalfluß zur Steuerung des Blockheizkraftwerkes
- 17: Signalfluß zwischen Blockheizkraftwerk und Heizungsanlage
- 18: Blockheizkraftwerk
- 19: Heizungsanlage
- 20: Wärmefluß
- 21: Brennstoffzufuhr
- 22: Wärmeverbraucher
- 23: Verbraucher

## Patentansprüche

1. Anordnung zum Angleichen der Leistung eines elektrischen Versorgungsnetzes an aktuelle Spitzenlasten, mit einer Netzleitstelle im Versorgungsnetz und mit mehreren, dezentral bei den Verbrauchern angeordneten, zeitweilig an- und abschaltbaren Blockheizkraftwerken deren Wärme auf kurzem Weg dem Verbraucher zugeleitet und deren elektrische Energie in das Versorgungsnetz eingespeist wird,
**dadurch gekennzeichnet,**
**daß** die Blockheizkraftwerke (18) über Datenleitungen (7, 10, 15, 16) mit der Schaltzentrale (4) der Netzleitstelle (3) verbunden sind und
**daß** die Schaltzentrale (4) der Netzleitstelle (3) mit einer Prozeßsteuerung ausgestattet ist, die
- eine Datenerfassung für Daten aus dem elektrischen Versorgungsnetz (8) und für Daten aus den Blockheizkraftwerken (18),
- eine Datenverarbeitung für die Daten aus dem Versorgungsnetz (8) und die Daten aus den Blockheizkraftwerken (18) sowie
- eine Ausgabeeinheit für Steuersignale der Blockheizkraftwerke (18) enthält.

2. Anordnung nach Anspruch 1, **dadurch gekennzeichnet,**
**daß** die Blockheizkraftwerke (18) mehreren, variablen, Anlagengruppen gebietsbezogen zugeordnet werden und
**daß** die Schaltzentrale (4) der Netzleitstelle (3) für die Ausgabe von Steuersignalen für Anlagengruppen und/oder für einzelne Blockheizkraftwerke (18) auf der Grundlage einer Steuermatrix ausgebildet ist.

3. Anordnung nach Anspruch 1 oder 2, **dadurch gekennzeichnet,**
**daß** die Schaltzentrale (4) zur Übetragung der Daten und Steuersignale zwischen der Netzleitstelle (3) und den Blockheizkraftwerken (18) mit dem Versorgungsnetz (8) oder einem Telefonnetz gekoppelt ist und eine Impuls- oder Frequenzsteuerung besitzt.

4. Anordnung nach einem der vorhergehenden Ansprüche,
**dadurch gekennzeichnet,**
**daß** die Blockheizkraftwerke (18) mit Generatoren ausgestattet sind, die von Wärmekraftmaschinen angetrieben werden, die mit den Heizungsanlagen (19) wärmegekoppelt sind.

5. Anordnung nach einem der vorhergehenden Ansprüche,
**dadurch gekennzeichnet,**
**daß** die Blockheizkraftwerke (18) aus Modulen mit einer elektrischen Leistung zwischen 2 kW und 10 kW bestehen und diese Module einzeln oder in Gruppen mit einer Heizungsanlage (19) wärmegekoppelt sind.

6. Verfahren zum Angleichen der Leistung eines elektrischen Versorgungsnetzes an aktuelle Spitzenlasten, mit einer Anordnung nach Anspruch 1, wobei in Abhängigkeit von der aktuellen Spitzenlast mehrere Energieerzeuger an das Versorgungsnetz angeschlossen werden,
**dadurch gekennzeichnet,**
**daß** folgende Schritte vorzugsweise nacheinander ausgeführt werden:
a) Erfassung von Daten über Höhe der benötigten elektrischen Energie und den Ort dieses Energiebedarfs,
b) Verarbeitung der erfaßten Daten zu einer Steuermatrix,
c) Festlegen mindestens der Anzahl von Blockheizkraftwerken (18) und des Gebietes, in dem Blockheizkraftwerke (18) zu- oder abgeschaltet werden sollen, aus den Daten der Steuermatrix,
d) Abfrage der Steuermatrix mindestens an den Schnittpunkten der Ganglinie mit den aneinandergrenzenden Spitzenlastbereichen,
e) Übergabe der Daten aus der Steuermatrix an die Schaltzentrale (4), die die Steuersignale erzeugt und diese über eine Impuls- oder Frequenzsteuerung an die ausgewählten Blockheizkraftwerke (18) leitet, um diese in Abhängigkeit von Leistung und Bedarf zuzuschalten bzw. abzuschalten,
f) Abfrage und Korrektur der Steuermatrix hinsichtlich festgelegter Paramerter mindestens an den Berührungspunkten der Ganglinie zwischen den Spitzenlastbereichen,
g) Aktualisieren der Steuermatrix mindestens am Ende des Kalendertages.

7. Verfahren nach Anspruch 6, **dadurch gekennzeichnet,**
**daß** zu Beginn des neuen Kalendertages jeweils die Steuermatrix des Vortages in den Speicher der Prozeßsteuerung eingelesen wird.

8. Verfahren nach Anspruch 6 oder 7, **dadurch gekennzeichnet, daß** im ersten Schritt a) weitere Daten,
- zu der Höhe der von den einzelnen Blockheizkraftwerken (18) zuschaltbaren Leistung,
- zur örtliche Lage der zuschaltbaren Blockheizkraftwerke (18),
- zu den aktuellen Zuständen der verfügbaren Blockheizkraftwerke (18) und
- zu dem lokalen Wärmebedarf an den einzelnen Heizungsanlagen (19) erfaßt werden,
und zusätzlich zum Schritt b)
die ermittelte Steuermatrix nach vorher bestimmten Parametern optimiert wird.

## Claims

1. An arrangement for adapting the power of an electric distribution network to temporary peak loads comprising of a load dispatching center in the distribution network and multiple unit-type heating and power stations that are decentrally located on consumers' premises and can temporarily be connected and disconnected, the heat generated by which being transmitted to the consumers over a short distance and the electric power generated by which being fed into the distribution network, **characterized**
**in that** the unit-type heating and power stations (18) are connected to the system control center (4) of the load dispatching center (3) via data lines (7, 10, 15, 16)
**in that** the system control center (4) of the load dispatching center (3) is equipped with process control components including
- a data collection module for data from the electric distribution network (8) and for data from the unit-type heating and power stations (18),
- a data processing module for data from the distribution network (8) and for data from the unit-type heating and power stations (18), and
- an output module for the control signals of the unit-type heating and power stations (18).

2. The arrangement according to Claim 1, **characterized**
**in that** the unit-type heating and power stations (18) are assigned to areas in multiple variable plant groups, and
**in that** the control center (4) of the load dispatching center (3) is configured for outputting control signals to plant groups and/or individual unit-type heating and power stations (18) based on a control matrix.

3. The arrangement according to Claims 1 or 2, **characterized**
**in that** the control center (4) is linked to the distribution network (8) or a telephone network for transmitting data and control signals between the control center (3) and the unit-type heating and power stations (18) and is pulse or frequency controlled.

4. The arrangement according to any one of the preceding claims, **characterized**
**in that** the unit-type heating and power stations (18) are equipped with generators driven by heat engines that are thermocoupled with the heating systems (19).

5. The arrangement according to any one of the preceding claims, **characterized**
**in that** the unit-type heating and power stations (18) consist of modules rated in the range of 2 kW to 10 kW and in that these modules are thermocoupled, either individually or in groups, with a heating system (19).

6. A method for adapting the power of an electric distribution network to temporary peak loads using an arrangement according to Claim 1 where multiple power generators are connected to the distribution network depending on the temporary peak load, **characterized**
**in that** the following steps are carried out one after the other:
a) Collection of data on the quantity of electric energy required and the location of this energy requirement,
b) Processing the data collected into a control matrix,
c) Specification of at least the number of unit-type heating and power stations (18) and the area which these unit-type heating and power stations (18) are to be connected to or disconnected from, based on the control matrix data,
d) Scanning the control matrix at least at the intersecting points of the load curve with the adjacent peak load areas,
e) Transfer of the data from the control matrix to the control center (4) which generates the control signals and transmits these using a pulse or frequency control system to the selected unit-type heating and power stations (18) to connect or disconnect them depending on power and demand requirements.
f) Scanning and adapting the control matrix with regard to specified parameters at least at the intersecting points of the load curve with peak load areas,
g) Updating the control matrix at least at the end of each calendar day.

7. The method according to Claim 5, **characterized**
**in that** the control matrix of the previous day is read into the memory of the process control system at the beginning of each new calendar day.

8. The method according to Claims 5 or 6, **characterized**
**in that** in the first step a), further data is collected
- on the power quantity that can be added from each unit-type heating and power station (18),
- on the location of the unit-type heating and power stations (18) that can be connected,
- on the temporary states of the available unit-type heating and power stations (18), and
- on the local heat requirement of each heating system (19),
and that in addition to step b)
the control matrix determined is optimized based on predefined parameters.

## Revendications

1. Dispositif pour adapter la puissance d'un réseau de distribution électrique à des pointes de charge temporaires, avec un centre de contrôle du réseau intégré au réseau de distribution électrique et plusieurs centrales thermiques modulaires de cogénération décentralisées qui peuvent être temporairement mises en ou hors circuit, et dont la chaleur est directement dirigée vers les consommateurs, leur énergie électrique étant utilisée pour alimenter le réseau de distribution électrique,
**caractérisé par le fait,**
**que** les centrales thermiques modulaires de cogénération (18) sont reliées par des circuits de données (7, 10, 15, 16) au centre de commutation (4) du centre de contrôle du réseau (3) et
**que** le centre de commutation (4) du centre de contrôle du réseau (3) est doté d'un système de pilotage qui comprend
- une unité de saisie de données qui reprend tant les données venant du réseau de distribution électrique (8) que celles transmises par les centrales thermiques modulaires de cogénération (18),
- une unité de traitement de données pour les données du réseau de distribution électrique (8) et pour celles des centrales thermiques modulaires de cogénération (18), ainsi
- **qu'**une unité de génération de signaux de commande des centrales thermiques modulaires de cogénération (18).

2. Dispositif selon la revendication 1, **caractérisé par le fait**
**que** les centrales thermiques modulaires de cogénération (18) sont affectées à plusieurs groupes d'installations différents, géographiquement groupées, et
**que** la conception l'unité de commande (4) du centre de contrôle du réseau (3) permet, à partir d'un schéma de pilotage, d'émettre des signaux de commande pour les différents groupes d'installations et/ou pour chacune des centrales thermiques modulaires de cogénération (18).

3. Dispositif selon les revendications 1 ou 2, **caractérisé par le fait**
**que** l'unité de commande (4), afin d'assurer la transmission des données et des signaux de commande entre le centre de contrôle du réseau (3) et les centrales thermiques modulaires de cogénération (18), est connectée au réseau de distribution électrique (8) ou bien à un réseau téléphonique. De plus, il est muni d'une commande par impulsions ou par fréquences.

4. Dispositif selon une les revendications précédentes, **caractérisé par le fait**
**que** les centrales thermiques modulaires de cogénération (18) sont équipées de groupes électrogènes qui sont entraînés par des moteurs thermiques, ces derniers étant raccordés aux installations de chauffage (19).

5. Dispositif selon une des revendications précédentes, **caractérisé par le fait**
**que** les centrales thermiques modulaires de cogénération (18) sont composées de modules ayant une puissance électrique de 2 kW à 10 kW et que ces modules sont connectés séparément ou par groupes à une installation de chauffage (19).

6. Procédé basé sur l'une des dispositions de la revendication 1 et conçu pour adapter la puissance d'un réseau de distribution électrique à des pointes de charge temporaires, tout en permettant de connecter, en fonction de la charge de pointe temporaire, plusieurs producteurs d'énergie au même réseau de distribution électrique, **caractérisé par le fait**
**que** les phases suivantes sont réalisées de préférence l'une après l'autre :
a) Saisie de données concernant la quantité d'énergie électrique nécessaire et le lieu de cette demande d'énergie,
b) Traitement des données saisies et traduction en schéma de pilotage,
c) Définition, à partir de ce schéma de pilotage, d'un nombre minimum de centrales thermiques modulaires de cogénération (18) et de la zone où ces centrales thermiques modulaires de cogénération (18) devront être mises en ou hors circuit,
d) Interrogation du schéma de pilotage, au moins aux intersections de la courbe de charge avec les zones contigües de pointes de charge,
e) Transfert des données du schéma de pilotage à l'unité de commande (4) qui produit les signaux de commande puis les transmet comme commande par impulsions ou par fréquences aux centrales thermiques modulaires de cogénération (18), ce qui permet de mettre en ou hors circuit ces centrales, en fonction de la puissance disponible et de la demande,
f) Interrogation et correction du schéma de pilotage, au moins au niveau des paramètres définis aux points de jonction entre les zones de charge de pointe de la courbe de charge,
g) Mise à jour du schéma de pilotage, au moins en fin de journée.

7. Procédé selon la revendication 5, **caractérisé par le fait**
**que** le schéma de pilotage du jour précédent est enregistré en début de jours chaque journée dans la mémoire de l'automate.

8. Procédé selon les revendications 5 ou 6, **caractérisé par le fait**
**que,** lors de la première phase a), sont saisies d'autres données relatives
- à la puissance potentielle qui peut être fournie par chaque centrale thermique modulaire de cogénération (18),
- à la situation locale des centrales thermiques modulaires de cogénération (18) à connecter,
- aux états actuels des centrales thermiques modulaires de cogénération (18) disponibles et
- au besoin calorique de chaque installation de chauffage (19) sont saisies,
et **que** de façon complémentaire, en phase b),
le schéma de pilotage déterminé est optimisée sur la base de paramètres prédéfinis.
